# EUROPÄISCHE PATENTSCHRIFT

(11) **EP 4 112 333 B1**
(45) Veröffentlichungstag und Bekanntmachung des Hinweises auf die Patenterteilung: **28.02.2024**
(21) Anmeldenummer: 22179145.2
(22) Anmeldetag: 15.06.2022
(51) Int. Cl.: B60C 7/10, B60C 7/12, B60C 19/12, B60C 5/00, B60C 5/12

(54) **FAHRZEUGRAD**
VEHICLE WHEEL
ROUE DE VÉHICULE

(30) Priorität: 01.07.2021 DE 102021206921
(43) Veröffentlichungstag der Anmeldung: 04.01.2023
(73) Patentinhaber: Continental Reifen Deutschland GmbH, 30165 Hannover (DE)
(72) Erfinder: Winkler, Dr. Jens, 30165 Hannover (DE); Komischke, Ralf, 30165 Hannover (DE); Gandyra, Stefan, 30165 Hannover (DE)
(74) Vertreter: Continental Corporation

(56) Entgegenhaltungen:
- EP-A1- 3 385 094
- CN-A- 104 149 551
- DE-U1-202010 005 400
- KR-A- 20210 034 736

## Beschreibung

Die Erfindung betrifft ein Fahrzeugrad.

Es sind unterschiedliche Konzepte bekannt, Fahrzeugluftreifen durch andere Fahrzeugreifen zu ersetzen. Alle neuen Konzepte haben ihre Vor- und Nachteile und haben sich bislang noch nicht am Markt durchgesetzt.

Die gattungsbildende EP 3 385 094 A1, DE 20 2010 005400 U1, CN 104 149 551 A und KR 2021 0034736 A offenbaren unterschiedliche Konzepte zu Fahrzeugrädern.

Der Erfindung lag die Aufgabe zugrunde, ein Fahrzeugrad bereitzustellen, bei dem insb. die Pannensicherheit verbessert wird.

Gelöst wird die Aufgabe durch Anspruch 1.

Ein Vorteil der Erfindung ist insbesondere darin zu sehen, dass mit der neuen Fahrzeugreifenkonstruktion eine hohe Pannensicherheit gewährleistet wird und außerdem der Fahrkomfort wesentlich verbessert wird. Der Schaumstoffring im mittleren Bereich sorgt dafür, dass das Fahrzeugrad optimal auf der Fahrbahn einfedern und außerdem einen hohen Fahrkomfort bereitstellen kann. Außerdem hat der Schaumstoffring den Vorteil, dass mit ihm eine hohe Pannensicherheit verbunden ist. Für den Fall, das spitze Gegenstände in den Schaumstoffring eindringen, führt das nicht zu einem Druckverlust des Reifens. Alle drei Bauteilgruppen des Fahrzeugreifens, der mittlere Bereich, der äußere Bereich und der innere Bereich können unabhängig voneinander hergestellt werden. Dadurch lässt sich der Fahrzeugreifen sehr flexibel herstellen.

In einer vorteilhaften Weiterbildung der Erfindung ist vorgesehen, dass im mittleren Bereich eine Vielzahl von unterschiedlichen Schaumstoffen angeordnet sind,
wobei sich die Schaumstoffe aufgrund ihrer Festigkeitseigenschaften voneinander unterscheiden.

Dadurch lassen sich die Federungseigenschaften des Fahrzeugrades an bestimmten Positionen gezielt einstellen.

In einer weiteren vorteilhaften Weiterbildung der Erfindung ist vorgesehen, dass ein keilförmiger Schaumstoffkörper aus einem weichen Schaumstoffmaterial in einem harten Schaumstoffkörper eingebettet ist.

Dadurch besitzt das Fahrzeugrad in seinen Randbereichen andere Festigkeitseigenschaften als in der Mitte.

In einer weiteren vorteilhaften Weiterbildung der Erfindung ist vorgesehen, dass der keilförmige Schaumstoffkörper symmetrisch oder asymmetrisch zu den Rändern des Schaumstoffringes angeordnet sind.

Dadurch lässt sich der Fahrkomfort an unterschiedliche Bedingungen anpassen.

In einer weiteren vorteilhaften Weiterbildung der Erfindung ist vorgesehen, dass der Schaumstoffring eine Materialdicke von mindestens 30 mm aufweist. Dadurch kann der Schaumstoffring einen hohen Fahrkomfort für das Fahrzeugrad bereitstellen.

Es ist vorgesehen, dass an der Seite vom Schaumstoffring eine Seitenwand in Form eines Verschlusses angeordnet ist,
wobei die Seitenwand den inneren Bereich und den äußeren Bereich des Fahrzeugrades überbrückt.

Dadurch wird verhindert, dass an der Seite des Schaumstoffringes Schmutz eindringen kann.

In einer weiteren vorteilhaften Weiterbildung der Erfindung ist vorgesehen, dass die Seitenwand aus einem Gummi, Gummiartigen Werkstoff oder einem Kunststoff besteht.

Dadurch besitzt die Seitenwand eine hohe Flexibilität.

In einer weiteren vorteilhaften Weiterbildung der Erfindung ist vorgesehen, dass die Seitenwand luftdurchlässig ist, wodurch Luftdruckunterschiede ausgeglichen werden können.

Dadurch wird die Einfederung des Schaumstoffringes nicht behindert.

In einer weiteren vorteilhaften Weiterbildung der Erfindung ist vorgesehen, dass die Seitenwände an dem inneren und äußeren Durchmesser konturierte Kontaktflächen aufweisen.

Dadurch wird die Montage der Seitenwand wesentlich vereinfacht.

In einer weiteren vorteilhaften Weiterbildung der Erfindung ist vorgesehen, dass der Schaumstoffring als ringförmiges Element in einem Formprozess hergestellt wird.

Dadurch lässt sich der Schaumstoffring einfach herstellen.

In einer weiteren vorteilhaften Weiterbildung der Erfindung ist vorgesehen, dass der Schaumstoffring als Endlosmaterial hergestellt wird und dann durch Fügen der Schnittstellen zu einem Ring geformt wird.

Dadurch ist der Schaumstoffring einfach herstellbar.

In einer weiteren vorteilhaften Weiterbildung der Erfindung ist vorgesehen, dass im Schaumstoffring mindestens ein Sensor, stromführende und datenführende Leitungen, mindestens eine Batterie und/oder ein Sender angeordnet sind.

Mit diesen elektronischen Bauteilen lassen sich wichtige Reifeneigenschaften einfach erfassen.

In einer weiteren vorteilhaften Weiterbildung der Erfindung ist vorgesehen, dass der Verbund mit dem Schaumstoffring mit weiteren Materialen in Form von Kunststoff, Flüssiggummi und/ oder Verstärkungskomponenten umgeben ist. Dadurch lassen sich die Festigkeitseigenschaften des mittleren Bereichs mit dem Schaumstoffring wesentlich verbessern.

In einer weiteren vorteilhaften Weiterbildung der Erfindung ist vorgesehen, dass der innere Bereich, der mittlere Bereich mit dem Schaumstoffring und der äußere Bereich des Fahrzeugrades mit einer Verklebung, einer Vulkanisationsverbindung, und/oder mit einer mechanischen Verbindung miteinander verbunden sind. Dadurch lassen sich diese Bauteilgruppen einfach und mit einer hohen Festigkeit verbinden.

Anhand eines Ausführungsbeispiels wird die Erfindung im Folgenden näher beschrieben.

Es zeigen:
Fig. 1: Einen Teilausschnitt eines Fahrzeugrades einer Radialschnittansicht.
Fig. 2: Das Fahrzeugrad in einer Seitenansicht.
Fig. 3: Der Schaumstoffring in einer Seitenansicht.
Fig. 4: Der Schaumstoffring in einer Radialschnittansicht.
Fig. 5: Ein weiteres Ausführungsbeispiel für einen Schaumstoffring.

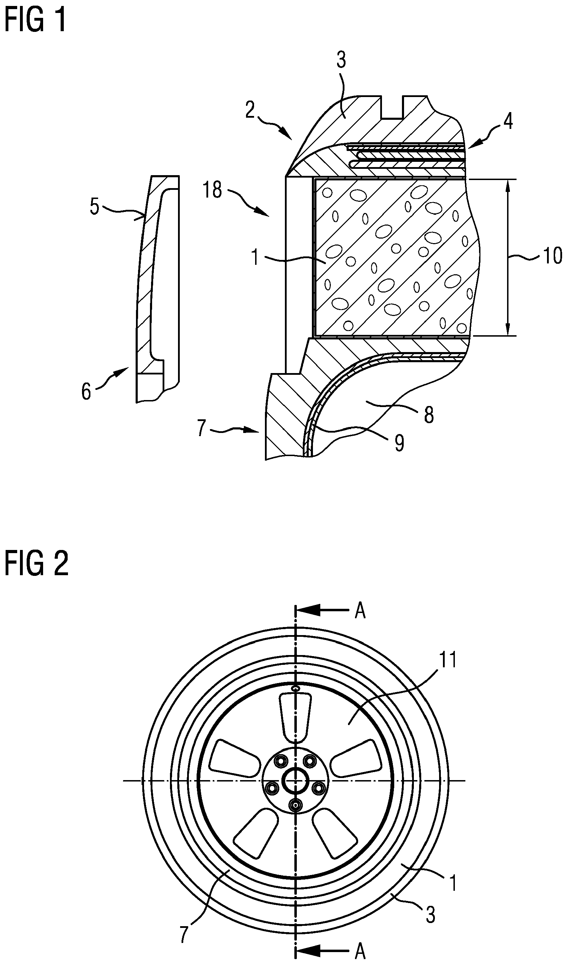

Die Figur 1 zeigt einen Teilausschnitt des erfindungsgemäßen Fahrzeugrades in einer Radialschnittansicht.

Der äußere Bereich 2 des Fahrzeugreifens, der mit der Fahrbahn in Kontakt steht, kann aus einer Vielzahl von Einzelteilen bestehen und insb. einen Laufstreifen 3 sowie einen Reifengürtel 4 umfassen. Der äußere Bereich 2 kann im Wesentlichen aus Gummi, Stahl und anderen Materialien bestehen, die in einem Vulkanisationsverfahren als Ringstruktur vorproduziert werden können. Dieser Bereich 2 würde mit konventionellen Aufbauprozessen hergestellt werden. Andere Produktionsprozesse, wie beispielsweise Klebeprozesse, sind, abhängig von den verwendeten Materialien, ebenfalls denkbar.

Der innere Bereich 7, der später mit Druckluft gefüllt und in Kontakt mit einer Felge ist, kann auch mit bekannten bestehenden Wickelprozessen auf einer Baumaschine zu einer Karkasse mit einer Karkasslage 9 zusammengestellt und in einem Vulkanisationsverfahren zu einer Unterbaugruppe verbunden werden. Andere Produktionsprozesse sind, abhängig von den verwendeten Materialien, ebenfalls denkbar.

Der mittlere Bereich 18 zwischen dem inneren druckluftgefüllten Bereich 7 und dem äußeren Bereich 2 weist ein Federungselement in Form eines Schaumstoffrings 1 aus, der eine Materialdicke 10 von mindestens 30 mm aufweist.

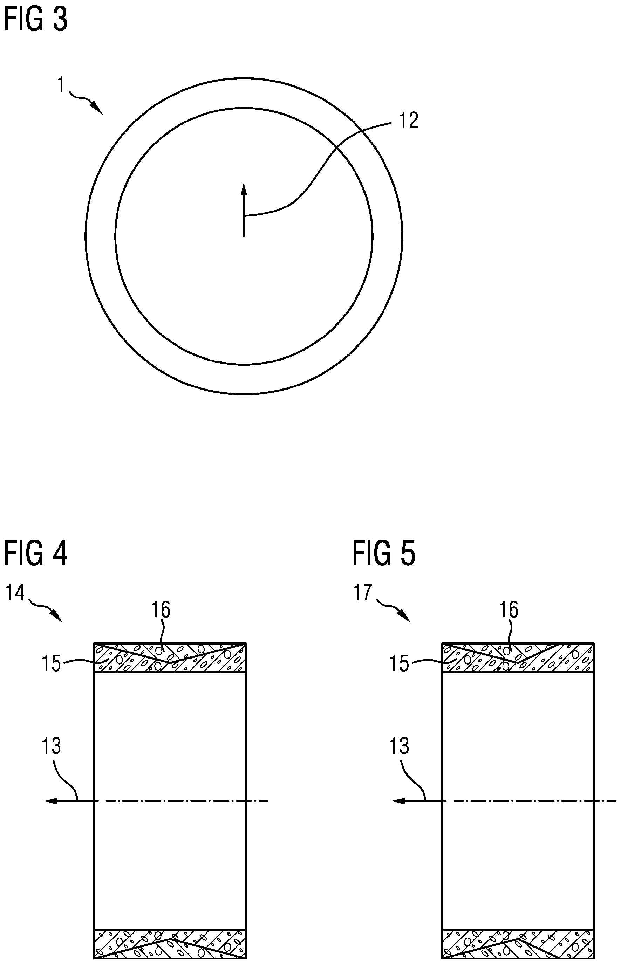

Dieser Schaumstoffring 1 kann über den Querschnitt sowohl in axialer Richtung 13 als auch in radialer Richtung 12 aus Schaumstoffen mit unterschiedlichen Festigkeiten ausgeführt sein, die aus unterschiedlichen Materialien bestehen und unterschiedliche Porengrößen aufweisen. Die Verteilung der Materialien kann dabei über den Querschnitt symmetrisch, wie es in der Fig. 4 schematisch dargestellt ist, oder auch asymmetrisch ausgeführt sein, wie es in der Fig. 5 schematisch dargestellt ist.

Dadurch kann beispielsweise eine axiale Steifigkeit mit einer stärkeren Einfederung im Zenit kombiniert werden, um den Fahrkomfort zu erhöhen.

Der Schaumstoffring 1 in der Fig. 3 kann als ringförmiges Element in einem Formprozess hergestellt werden oder auch als Endlosmaterial erzeugt und dann, auf den Umfang abgelängt, durch Fügen der Schnittstellen zu einem Ring geformt werden. Dabei können bei der Verwendung verschiedener Schäume diese gemeinschaftlich erzeugt oder einzeln erzeugt und dann gefügt werden. Der Querschnitt des Schaumstoffrings 1 kann dabei in axialer und radialer Richtung aus verschiedenen Streifen desselben oder verschiedener Materialen aufgebaut werden, so dass sich mit einer geringen Anzahl an Ausgangsstreifengeometrien durch Kombination beliebige Querschnitte und Durchmesser erzeugen lassen. Dabei können die Querschnitte durch Kombination einer Vielzahl ringfömig geschlossener Elemente zusammengesetzt werden oder spiralförmig, beispielsweise durch einen Spulprozess auf einem zylindrischen Werkzeug gewickelt werden.

Ggf. ist eine abschließende abtragende Bearbeitung vorzusehen, bei der aus einem ringförmigen Grundkörper durch Entfernen von Material die gewünschte Endgeometrie erzeugt wird. Dieser Abtrag kann beispielsweise durch ein erwärmtes Messer, ein Ultraschallmesser oder ein Wasserstrahlschneiden erfolgen.

Bei der Zusammensetzung des Schaumstoffringes aus Streifen können in den Streifenzwischenräumen Sensoren, stromführende und datenführende Leitungen, Batterien und Sender eingebaut werden, beispielsweise um die Temperatur im Schaumstoffring beim Reifenbetrieb zu erfassen oder um eine Beschleunigung beim Latschdurchlauf zu ermitteln.

Außerdem kann mit Sensoren im Schaumstoffring der Verschleißzustand des Reifens ermittelt werden und die ermittelten Daten an einen Empfänger im Fahrzeug übertragen werden.

Es ist zudem denkbar bei einer Umhüllung mit leitfähigem Material aus Gummi oder Kunststoff eine Sensorik darzustellen, die beispielsweise das Eindringen oder den Durchstich von metallischen Fremdkörpern detektieren können. Ebenfalls ist es möglich, durch Induktionsprozesse eine Spannung zu generieren, die zum Beispiel als Energieversorgung für Sensoren oder andere Verbraucher - auch in angrenzenden weiteren Reifenbauteilen- dienen kann.

Dieser Verbund aus Schaumstoffring und elektronischen Bauteilen kann außerdem mit einem weiteren Material umgeben werden, z.B. Kunststoff, Flüssiggummi oder weiteren Verstärkungskomponenten.

Abhängig von der Lage der Verstärkungskomponenten, wobei die Ausrichtung radial, axial oder in Umfangsrichtung gerichtet sein kann, kann dieses Material ebenfalls Kräfte übertragen. Besonders vorteilhafte Materialien sind Glasfasern oder Kohlefasern, die dem Material beigemischt werden oder als zusätzlich Bauteile appliziert werden.

Die Verbindung zwischen den einzelnen Reifenbaugruppen:
a) Innerer druckluftgefüllter Bereich 7
b) Mittlerer Bereich 18 als Schaumstoffring 1 mit oder ohne Verstärkungskom ponenten
c) Äußerer Bereich 2 mit Laufstreifen 3 und Reigengürtel 4 kann, abhängig von den verwendeten Materialien an den Übergängen, mittels Verklebung, Vulkanisation, mechanischer Verbindung oder als Kombination von unterschiedlichen Verbindungsarten ausgeführt sein.

Die Seitenwände 5 sind in Form eines Verschlusses ausgebildet. Sie sind u.a. zur Vermeidung der Verschmutzung der Schaumstruktur vorgesehen und decken den Bereich auf den Außenseiten des Reifens mit mindestens einer Materiallage ab. Bei geschlossen porigen Schäumen können separate Seitenwände weggelassen werden.

Die Seitenwand 5 kann aus Gummi-, Gummiartigen Werkstoffen, Kunststoffen oder anderen Materialien bestehen. Eine Materialkombinationen kann ebenfalls vorteilhaft sein. Um Luftdruckunterschiede auszugleichen, sollte die Seitenwand luftdurchlässig sein.

Da die Seitenwände 5 elastisch sein sollten, können sie vorzugsweise in einem Spritzgußverfahren produziert werden. Alternative Möglichkeiten zur Herstellung sind ein Transfermolding Verfahren oder ein 3D-Druckverfahren.

Die Seitenwände 5 verfügen an dem inneren und äußeren Durchmesser über konturierte Kontaktflächen 6, die je nach Material als Verklebungsstelle oder auch Vulkanisationsstelle mit den bereits gefügten Reifenbaugruppen dienen. Es sind ebenfalls mechanische formschlüssige Verbindungsarten für die Seitenwand 5 möglich.

Die neue Fahrzeugrad-Konstruktion, wie sie in der Fig. 2 in einer Seitenansicht dargestellt ist, bietet außerdem die folgenden Vorteile.

Eine Verwendbarkeit von bereits bestehender Materialien und Prozesse für den druckluftgefüllten inneren Bereich 7 und den äußeren Bereich 2 des Fahrzeugrades ist gegeben. Es ist außerdem möglich das Laufstreifenpaket und die Karkasse mit einer konventionellen Technologie zu fertigen.

Durch den Einsatz verschiedener Schäume kann das Härteprofil des Reifens über den Querschnitt des Schaumstoffrings 1 verändert werden.

Für unterschiedliche Reifenbreiten und Durchmesser kann die Geometrie des Schaumstoffrings 1 einfach adaptiert werden.

Das umhüllende Material des Schaumstoffrings 1 muss nicht luftdicht ausgeführt werden und könnte aus kostengünstigem Kunststoff bestehen. Bei der Verwendung geschlossen poriger Schäume ist eine Umhüllung verzichtbar

### Bezugszeichenliste (Teil der Beschreibung)

1 Schaumstoffring
2 Äußerer Bereich des Fahrzeugrades
3 Laufstreifen
4 Reifengürtel
5 Seitenwand
6 Konturierte Kontaktfläche am inneren Durchmesser der Seitenwand
7 Innerer Bereich des Fahrzeugrades
8 Druckluftkammer
9 Karkasslage
10 Materialdicke des Schaumstoffringes
11 Konventionelle Fahrzeugfelge
12 Radiale Richtung
13 Axiale Richtung
14 Symmetrische Anordnung der zwei unterschiedlichen Schaummaterialien
15 Hartes Schaummaterial
16 Weiches Schaummaterial
17 asymmetrische Anordnung der zwei unterschiedlichen Schaummaterialien
18 Mittlerer Bereich

## Patentansprüche

1. Fahrzeugrad mit einem druckluftgefüllten inneren Bereich (7) und einem äußeren Bereich (2),
wobei der äußere Bereich (2) eine Vielzahl von Reifenbauteilen und zumindestens einen Laufstreifen (3) umfasst und
wobei der innere Bereich (7) eine Druckluftkammer (8) mit einem Reifenwulst aufweist,
wobei im mittleren Bereich (18) zwischen dem druckluftgefüllten inneren Bereich (7) und dem äußeren Bereich (2) ein Federungselement in Form eines Schaumstoffringes (1) aus mindestens einem Schaumstoffmaterial angeordnet ist;
**dadurch gekennzeichnet, dass** an der Seite vom Schaumstoffring (1) eine Seitenwand (5) in Form eines Verschlusses angeordnet ist,
wobei die Seitenwand (5) den inneren Bereich (7) und den äußeren Bereich (2) des Fahrzeugrades überbrückt.

2. Fahrzeugrad nach Anspruch 1,
**dadurch gekennzeichnet, dass**
im mittleren Bereich (18) eine Vielzahl von unterschiedliche Schaumstoffen angeordnet sind,
wobei sich die Schaumstoffe aufgrund ihrer Festigkeitseigenschaften voneinander unterscheiden.

3. Fahrzeugrad nach einem der vorhergehenden Ansprüche,
**dadurch gekennzeichnet, dass**
ein keilförmiger Schaumstoffkörper aus einem weichen Schaumstoffmaterial (16) in einem harten Schaumstoffkörper (15) eingebettet ist.

4. Fahrzeugrad nach Anspruch 3,
**dadurch gekennzeichnet, dass**
der keilförmige Schaumstoffkörper symmetrisch (14) oder asymmetrisch (17) zu den Rändern des Schaumstoffringes angeordnet sind.

5. Fahrzeugrad nach einem der vorhergehenden Ansprüche,
**dadurch gekennzeichnet, dass**
der Schaumstoffring (1) eine Materialdicke von mindestens 30 mm aufweist.

6. Fahrzeugrad nach einem der vorhergehenden Ansprüche,
**dadurch gekennzeichnet, dass**
die Seitenwand (5) aus einem Gummi, Gummiartigen Werkstoff oder einem Kunststoff besteht.

7. Fahrzeugrad nach einem der vorhergehenden Ansprüche,
**dadurch gekennzeichnet, dass**
die Seitenwand (5) luftdurchlässig ist, wodurch Luftdruckunterschiede ausgeglichen werden können.

8. Fahrzeugrad nach einem der vorhergehenden Ansprüche,
**dadurch gekennzeichnet, dass**
die Seitenwände (5) an dem inneren und äußeren Durchmesser konturierte Kontaktflächen (6) aufweisen.

9. Fahrzeugrad nach einem der vorhergehenden Ansprüche,
**dadurch gekennzeichnet, dass**
der Schaumstoffring (1) als ringförmiges Element in einem Formprozess hergestellt wird.

10. Fahrzeugrad nach einem der vorhergehenden Ansprüche,
**dadurch gekennzeichnet, dass**
der Verbund mit dem Schaumstoffring (1) mit weiteren Materialen in Form von Kunststoff, Flüssiggummi und/ oder Verstärkungskomponenten umgeben ist.

11. Fahrzeugrad nach einem der vorhergehenden Ansprüche,
**dadurch gekennzeichnet, dass**
der innere Bereich (7), der mittlere Bereich (18) mit dem Schaumstoffring (1) und der äußere Bereich (2) des Fahrzeugrades mit einer Verklebung, einer Vulkanisationsverbindung, und/oder mit einer mechanischen Verbindung miteinander verbunden sind.

## Claims

1. Vehicle wheel having a compressed-air-filled inner region (7) and an outer region (2),
wherein the outer region (2) comprises a multiplicity of tyre components and at least a tread (3), and
wherein the inner region (7) has a compressed-air chamber (8) with a tyre bead,
wherein a suspension element in the form of a foam ring (1) composed of at least one foam material is arranged in the central region (18) between the compressed-air-filled inner region (7) and the outer region (2);
**characterized in that**
a sidewall (5) in the form of a closure is arranged on the side of the foam ring (1),
wherein the sidewall (5) bridges the inner region (7) and the outer region (2) of the vehicle wheel.

2. Vehicle wheel according to Claim 1,
**characterized in that**
a multiplicity of different foams are arranged in the central region (18),
wherein the foams differ from one another on account of their strength properties.

3. Vehicle wheel according to either of the preceding claims,
**characterized in that**
a wedge-like foam body composed of a soft foam material (16) is embedded in a hard foam body (15).

4. Vehicle wheel according to Claim 3,
**characterized in that**
the wedge-like foam body is arranged symmetrically (14) or asymmetrically (17) with respect to the edges of the foam ring.

5. Vehicle wheel according to one of the preceding claims,
**characterized in that**
the foam ring (1) has a material thickness of at least 30 mm.

6. Vehicle wheel according to one of the preceding claims,
**characterized in that**
the sidewall (5) consists of a rubber, rubber-like material or a plastic.

7. Vehicle wheel according to one of the preceding claims,
**characterized in that**
the sidewall (5) is air-permeable, as a result of which air pressure differences can be compensated.

8. Vehicle wheel according to one of the preceding claims,
**characterized in that**
the sidewalls (5) have contoured contact surfaces (6) on the inner and outer diameter.

9. Vehicle wheel according to one of the preceding claims,
**characterized in that**
the foam ring (1) is produced as a ring-like element in a forming process.

10. Vehicle wheel according to one of the preceding claims,
**characterized in that**
the composite comprising the foam ring (1) is surrounded with further materials in the form of plastic, liquid rubber and/or reinforcing components.

11. Vehicle wheel according to one of the preceding claims,
**characterized in that**
the inner region (7), the central region (18) with the foam ring (1), and the outer region (2) of the vehicle wheel are connected to one another by means of an adhesive bond, a vulcanization connection and/or by means of a mechanical connection.

## Revendications

1. Roue de véhicule avec une zone intérieure (7) remplie d'air comprimé et une zone extérieure (2),
la zone extérieure (2) comprenant une pluralité de composants de pneu et au moins une bande de roulement (3), et
la zone intérieure (7) présentant une chambre à air comprimé (8) avec un talon de pneu,
un élément de suspension sous la forme d'un anneau de mousse (1) en au moins
un matériau en mousse étant agencé dans la zone centrale (18) entre la zone intérieure (7) remplie d'air comprimé et la zone extérieure (2) ;
**caractérisée en ce**
**qu'**une paroi latérale (5) sous la forme d'une fermeture est agencée sur le côté de l'anneau en mousse (1),
la paroi latérale (5) enjambant la zone intérieure (7) et la zone extérieure (2) de la roue de véhicule.

2. Roue de véhicule selon la revendication 1,
**caractérisée en ce**
**qu'**une pluralité en mousses différentes sont agencées dans la zone centrale (18),
les mousses étant différentes les unes des autres en raison de leurs propriétés de résistance.

3. Roue de véhicule selon l'une quelconque des revendications précédentes,
**caractérisée en ce**
**qu'**un corps en mousse en forme de coin composé d'un matériau en mousse souple (16) est incorporé dans un corps en mousse dure (15).

4. Roue de véhicule selon la revendication 3,
**caractérisée en ce que**
les corps en mousse en forme de coin sont agencés de manière symétrique (14) ou asymétrique (17) par rapport aux bords de l'anneau en mousse.

5. Roue de véhicule selon l'une quelconque des revendications précédentes,
**caractérisée en ce que**
l'anneau en mousse (1) présente une épaisseur de matériau d'au moins 30 mm.

6. Roue de véhicule selon l'une quelconque des revendications précédentes,
**caractérisée en ce que**
la paroi latérale (5) est constituée d'un caoutchouc, d'un matériau de type caoutchouc ou d'une matière plastique.

7. Roue de véhicule selon l'une quelconque des revendications précédentes,
**caractérisée en ce que**
la paroi latérale (5) est perméable à l'air, ce qui permet de compenser des différences de pression atmosphérique.

8. Roue de véhicule selon l'une quelconque des revendications précédentes,
**caractérisée en ce que**
les parois latérales (5) présentent des surfaces de contact profilées (6) sur les diamètres intérieur et extérieur.

9. Roue de véhicule selon l'une quelconque des revendications précédentes,
**caractérisée en ce que**
l'anneau en mousse (1) est fabriqué sous forme d'élément annulaire dans un processus de moulage.

10. Roue de véhicule selon l'une quelconque des revendications précédentes,
**caractérisée en ce que**
le composite avec l'anneau en mousse (1) est entouré d'autres matériaux sous forme de matière plastique, de caoutchouc liquide et/ou de composants de renforcement.

11. Roue de véhicule selon l'une quelconque des revendications précédentes,
**caractérisée en ce que**
la zone intérieure (7), la zone centrale (18) avec l'anneau en mousse (1) et la zone extérieure (2) de la roue de véhicule sont reliées entre elles par un collage, une liaison par vulcanisation et/ou par une liaison mécanique.
